# EUROPEAN PATENT APPLICATION

(11) **EP 4 328 015 A1**
(43) Date of publication of application: **28.02.2024**
(21) Application number: 22195167.6
(22) Date of filing: 12.09.2022
(51) Int. Cl.: B32B 3/06, B32B 5/18, B32B 27/06, B32B 27/20, B32B 27/32, B32B 27/08, E04F 15/10

(54) **DECORATIVE PANEL AND METHOD FOR MANUFACTURING DECORATIVE PANELS**

(30) Priority: 26.08.2022 US 202263401308 P
(71) Applicant: Flooring Industries Limited, SARL, 8070 Bertrange (LU)
(72) Inventor: SCHACHT, Benny, 8710 Wielsbeke (BE)
(74) Representative: Unilin Technologies

(57) **Abstract**

Decorative panel comprising a substrate (2) and a provided thereon top layer (3), wherein said substrate (2) at least comprises a semi-crystalline polymer (4), characterized in that said decorative panel (1) shows one or a combination of two or more of the following properties:
- the property that the crystallinity of said polymer is below 85%, as measured using differential scanning colorimetry;
- the property that the crystallinity of said polymer is above 35%, preferably above 50%;
- the property that said polymer is mono-axially oriented;
- the property that said top layer comprises semi-crystalline polymer, wherein the crystallinity of said polymer comprised in said substrate (2) is lower than the crystallinity of said polymer comprises in said decorative top layer;
- the property that said substrate (2) comprise a plurality of substrate layers, wherein at least two of said plurality of substrate layers comprise a semi-crystalline polymer.

## Description

The present invention relates to decorative panels and a method for manufacturing decorative panels. The decorative panels of the invention are in the first place destined for application as floating floor panels, but may also be applied otherwise. For example as glued down floor panels, or as wall or ceiling panels.

WO 97/47834 describes a laminate floor panel for assembling a floating floor covering. The floor panel, as described herein, has as a disadvantage that the applied substrate, more in particular the MDF or HDF substrate (Medium Density Fiberboard of High Density Fiberboard) is prone to damaging by moisture. The laminate top layer gives raise to walking and/or ticking sounds.

EP 1 938 963 discloses a floor panel based on synthetic material, more particularly soft polyvinyl chloride (PVC). The floor panels may be obtained at least by lamination of several synthetic foils. EP 3 405 346 discloses a floor panel of a high density filled polyvinyl chloride material. The floor panels may be obtained at least by extrusion. In both, the EP'963 and the EP'346 the floor panels are provided with a decorative top layer comprising PVC. The floor panels of EP'963 and EP'346 may be more water resistant than the panels of WO'834, and/or provide for a more pleasant walking and/or ticking sound. The use of PVC, plasticizers and/or other additives may, however, at least in some cases, be harmful to the environment.

From WO 2017/122149, it is known to use a PET (polyethylene terephthalate) composition as a substrate in a flooring panel, wherein the substrate may be formed at least by means of extrusion. From WO 2014/111192, it is known to use a thermoplastic composition comprising PP (polypropylene) as a substrate in a decorative panel. Panels comprising a substrate with PET or PP may be particularly prone to deformation in changing ambient conditions, due to their crystallinity.

The present invention in the first place seeks to provide an alternative decorative panel, wherein, in accordance with preferred embodiments, a solution is provided for one or more of the problems with the decorative panels of the state of the art.

With this aim, the present invention in accordance with its first independent aspect is a decorative panel comprising a substrate and a provided thereon top layer, wherein said substrate at least comprises a semi-crystalline or crystalline polymer and/or a polymer chosen from the list consisting of polyacetal (POM), polyphenylene sulfide (PPS), polyamides (such as PA 6 and PA 66), polyethylene terephthalate (PET), polyethylene (PE), low-density polyethylene (LDPE), high-density polyethylene (HDPE), polybutylene terephthalate (PBT) and polypropylene (PP), with as a characteristic that said decorative panel shows one or a combination of two or more of the following properties.

According to a first possible property, the crystallinity of said polymer is below 95% or below 85%, as preferably measured using differential scanning calorimetry (DSC) in accordance with ISO 11357-3:2018. By limiting the crystallinity, dimensional instability of the decorative panel as a whole may be kept within acceptable boundaries.

According to a second possible property, the crystallinity of said polymer is above 35%, preferably above 50%, as preferably measured using differential scanning calorimetry (DSC) in accordance with ISO 11357-3:2018. Allowing for a minimum crystallinity is beneficial for the toughness, strength, especially the tensile strength of the substrate material, and chemical resistance of the substrate material. The first and second possible property are preferably combined, such that an optimized crystallinity is obtained in view of the desired properties of the decorative panel, for example a floor panel, while maintaining a good dimensional stability.

According to a third possible property, said polymer is mono-axially oriented, or at least oriented in one direction. The orientation of the polymer chains predominantly in at least one direction may lead to an increased strength, in particular tensile strength, in the respective direction. Preferably the direction of orientation coincides, or about coincides, with the largest dimension of the decorative panel. For example, in the case of rectangular and oblong panels, the direction of orientation preferably coincides, or about coincides with the longitudinal direction of the decorative panels. In such case, stresses due to dimensional instability may be best coped with, since it may be expected that shrinkage or expansion will be largest in the longitudinal direction. When this third property is practiced at least in combination with said first possible property, and potentially said second possible property, the remaining, to be expected dimensional instability, may be managed.

According to a fourth possible property, said top layer comprises a crystalline or semi-crystalline polymer, wherein the crystallinity of said polymer comprised in said substrate is lower than the crystallinity of said polymer comprised in said decorative top layer. This property limits possible dimensional changes, as the layer with the largest crystallinity, and thus the highest expected dimensional instability, here the decorative top layer may be, and preferably is, thinner than the substrate. According to this fourth possible property the substrate may thus stabilize the decorative top layer to a certain extent. Preferably, said decorative panel further comprises a layer at the bottom of said substrate, wherein said layer also comprises a semicrystalline or crystalline polymer, and preferably has a higher crystallinity than said substrate. In such case, this layer may to a certain extent counterbalance any warping effects created by the higher dimensional instability of the decorative top layer as compared to said substrate. Preferably, the crystallinity of said layer applied to the bottom of the substrate is the same, or within 10% or within 5% of the crystallinity of the decorative top layer and/or the thickness of said layer applied to the bottom of the substrate is the same, or within 10% or within 5% of the thickness of the decorative top layer. In such case, an optimal counterbalancing effect may be obtained. The present fourth possible property is preferably combined with the first, second and/or third property. Preferably, the crystalline or semicrystalline polymer contained in said decorative top layer and/or layer applied to the bottom of said substrate is at least mono-axially oriented, and is preferably biaxially oriented. The decorative top layer and/or layer applied to the bottom of said substrate may for example comprise an oriented polypropylene or polyethylene foil. In case the present fourth possibility is combined at least with said third possibility, the polymer of the decorative top layer and/or the bottom layer may be oriented at least in one direction that is transverse to the orientation of the semi-crystalline polymer contained in said substrate, wherein the orientation of the semi-crystalline polymer contained in said substrate is preferably mono-axially, or predominantly in a single direction. For example, the substrate polymer material may be at least oriented, or predominantly oriented, in the longitudinal direction, in the case of rectangular and oblong panels, while the decorative layer and/or bottom layer may comprise a foil being bi-axially oriented, both in the longitudinal direction and the transverse direction of the panel. In such cases, the combination of the third and fourth possibility yields desirable synergistic effects in relation to an enhanced dimensional stability of the decorative panel as a whole.

According to a fifth possible property, said substrate comprises a plurality of substrate layers, wherein at least two of said plurality of substrate layers comprise a semi-crystalline polymer and/or and/or a polymer chosen from the list consisting of polyacetal (POM), polyphenylene sulfide (PPS), polyamides (such as PA 6 and PA 66), polyethylene terephthalate (PET), polyethylene (PE), low-density polyethylene (LDPE), high-density polyethylene (HDPE), polybutylene terephthalate (PBT) and polypropylene (PP). Having such a polymer arranged in a multiple layerwise fashion within the substrate, allows for an optimal coping with any disadvantageous effects, such as shrinking and/or expansion. Preferably the semi-crystalline polymer in said at least two substrate layers is the same or is at least build from the same monomer. Preferably, the other constituents of the respective two substrate layers are similar, or the same, and are present in a similar amount, or in the same amount. For example, both substrate layers may comprise filler materials, preferably at a same rate or about the same rate. Preferably, in said fifth property, said at least two substrate layers are distanced from one another by an additional layer comprising polymer, either a semi-crystalline or crystalline polymer or another polymer, such as PVC. Alternatively or in combination, the at least two substrate layers may be distanced by at least a reinforcement layer, or may comprise a reinforcement layer at their mutual interface surface. Preferably, in said fifth property, the number of polymer containing substrate layers is preferably odd, for example three or five. Preferably, said at least two substrate layers comprising the semi-crystalline or crystalline material are positioned with at least one of their main surfaces at equal, or about equal distance from the center, seen in thickness direction, of the substrate. Preferably, said at least two substrate layers comprising the semi-crystalline or crystalline material have an equal thickness, or about an equal thickness, for example with a difference in thickness wherein the thinnest is at least 90% of the thickness of the thickest.

Preferably said semi-crystalline or crystalline polymer is a thermoplastic polymer.

The substrate or the respective substrate layer or layers that comprise said semi-crystalline polymer are preferably consisting of, or essentially comprising, a filled synthetic material, for example for more than 85 wt% formed from such filled synthetic material. In such case, the synthetic material is preferably mainly or exclusively formed from said semi-crystalline or crystalline polymer, for example for more than 85%, wherein said semi-crystalline or crystalline polymer is preferably thermoplastic, or formed from a polymer chosen from the list consisting of polyacetal (POM), polyamides (PA 6 and PA 66), polybutylene terephthalate (PBT), polyethylene terephthalate (PET), low-density polyethylene (LDPE), high-density polyethylene (HDPE), polyphenylene sulfide (PPS), and polypropylene (PP).

The substrate may comprise a reinforcement layer, such as a woven or non-woven reinforcement layer, for example a glass fiber woven or non-woven layer. The semi-crystalline or crystalline polymer may be continuous through the openings of the reinforcement layer, such as through the mazes of a glass fiber woven layer, for example a woven layer with a net structure of glass fibers extending in at least two crossing directions.

Preferably, said semi-crystalline polymer is chosen from the list consisting of polyacetal (POM), polyamides (PA 6 and PA 66), polybutylene terephthalate (PBT), polyethylene terephthalate (PET), low-density polyethylene (LDPE), high-density polyethylene (HDPE), polyphenylene sulfide (PPS), and polypropylene (PP). Said semi-crystalline polymer may be a homopolymer or a heteropolymer, preferably having a main component of one of polyacetal (POM), polyamides (PA 6 and PA 66), polybutylene terephthalate (PBT), polyethylene terephthalate (PET), low-density polyethylene (LDPE), high-density polyethylene (HDPE), polyphenylene sulfide (PPS), and polypropylene (PP).

Preferably the polymer, semi-crystalline polymer or crystalline polymer applied in the first aspect is a polypropylene polymer. The polypropylene may herein be a homopolymer or a heteropolymer with the main constituent being polypropylene. For example, the semi-crystalline polymer may be polypropylene copolymerized with ethylene, for example with 15 wt% or less ethylene. In a particular example the polypropylene is copolymerized with 3w% or about 3wt% ethylene. A copolymerization with ethylene may yield a more fluent working of the material, such as a more fluent extrusion. Furthermore, a copolymer, for example with ethylene, may influence the amount or speed of crystallization. With a higher speed of crystallization the required heating capacity in production can be reduced for obtaining a desired crystallization. This is especially the case with low, e.g. less than 15 wt%, less than 10 wt% or even less than 5 wt%, ethylene content in the polypropylene copolymer. Preferably, the PP may be blended with a co[poly(butylene terephthalate-p-oxybenzoate)] copolyesters, for example with the copolyester level between 5 and 15 wt.%, to yield an interesting ethylene-propylene copolymer.

Preferably the polymer, semi-crystalline polymer or crystalline polymer applied in the first aspect is a heteropolymer, preferably comprising ethylene and propylene. The polymer may for example be polyethylene copolymerized with polypropylene, for example with 15wt% or less propylene. According to another example the semi-crystalline or crystalline polymer is a propylene-ethylene random copolymers (PP-R).

Preferably, said substrate comprises a filled synthetic material, wherein said filled synthetic material is formed at least by said semi-crystalline or crystalline polymer and filler material. For said filler material, mainly three variants are envisaged.

According to a first variant, said filler material has a density of 300 kg/m³ or lower, for example of 120-180 kg/m³ and/or comprises materials chosen from the list consisting of rice husk, cork, bamboo, sugar cane, foamed synthetic material, porous inorganic material, perlite (preferably expanded perlite), vermiculite (preferably expanded or exfoliated vermiculite), cenolite and pumicite. Such filler materials may limit the density of the obtained substrate material. Preferably, the filler material is present in particle form. According to a variant, the filler material, bamboo and sugar cane for example, may be present in fiber form. In such case the fibers may mechanically reinforce the semi-crystalline or crystalline material. Preferably, a weight reduction is obtained of at least 10%, or even of at least 35%. It is not excluded that a reduction 50% or more in weight is obtained. In said first variant, preferably an amount of filler material is available in said filled synthetic material as expressed by a weight ratio filler to synthetic material of 5 to 25%. As an example, in a filled polypropylene substrate material a ratio of 15% of a 150 kg/m³ filler may be applied, for example 15% of exfoliated vermiculite. Making abstraction from possible minority additives, and with a density of 920 kg/m³ of the polypropylene, this means that about 48% of the volume of the filled synthetic material is formed by said filler and a total density of 550 kg/m³ is obtained. Herein a weight reduction of 370/920 or about 40% is obtained. Seeing the obtainable weight reduction, the use of light filler materials is also of interest to other decorative panels than those of the first independent aspect, and therefore forms per se a particular independent aspect of the present invention, which is a decorative panel comprising a substrate and a provided thereon top layer, wherein said substrate at least comprises a filled synthetic material, wherein said filled synthetic material is formed at least by a, preferably thermoplastic, polymer and filler material characterized in that said filler material comprises filler material having a density of 300 kg/m³ or lower, for example of 120-180 kg/m³, and/or materials chosen from the list consisting of rice husk, cork, bamboo, sugar cane, foamed synthetic material, porous inorganic material, perlite, vermiculite, cenolite and pumicite. It is clear that preferred embodiments of this particular independent aspect may show the features of the preferred embodiments of the first aspect, without the polymer necessarily being a crystalline or semi-crystalline polymer. For example, the polymer may also be polyvinyl chlorde (PVC). According to a preferred embodiment, the entirety, or at least 75 vol% or at least 85 vol%, of the filler material in the filled synthetic material of the particular independent aspect is the light weight filler material.

According to a second variant, said filler material has a density higher than said polymer, or a density of 1200 kg/m³ or higher, for example a density of 1800-3000 kg/m³ and/or said filler material comprises materials chosen from the list consisting of chalk, talcum, limestone, CaCO3, sand and SiO2. It is noted that high weight filler materials, as the above, have a further stabilizing effect on possible dimensional instability, and may keep the decorative panel in its installed position more easily. In said second variant, preferably an amount of filler material is available in said filled synthetic material as expressed by a weight ratio filler to synthetic material of 100 to 450%. As an example, in a filled polypropylene substrate material a ratio of 400% of a 2500 kg/m³ filler may be applied, for example 400% of chalk. Making abstraction from possible minority additives, and with a density of 920 kg/m³ of the polypropylene, this means that about 60% of the volume of the filled synthetic material is formed by said filler and a total density of 2045 kg/m³ is obtained. It is noted that such a highly filled polypropylene material shows a lower weight than a similarly filled polyvinylchloride material, and may therefore be interesting to limit transportation costs and enhance the ergonomics for the installer. This may also be the case with highly filled polyethylene, such as highly filled LDPE or HDPE.

It is noted that replacing a high volume, for example more than 20 vol %, or more than 40 vol % of the semi-crystalline or crystalline polymer, for example PP, possibly a copolymer thereof, in the synthetic material by a low or high weight filler, for example respectively a filler with a density lower than 250 kg/m³ or above 2000 kg/m³, is possible and does not necessarily create strength problems. This is especially the case where the previously mentioned second and/or third possible property of the invention is practiced. A relatively high degree of crystallinity and/or an orientation of the polymer in at least one direction is herein advantageous. Moreover, the high volume content of filler may limit the dimensional instability.

In the first and second variant, in accordance with preferred embodiments thereof, the entirety, or at least 75 vol% or at least 85 vol%, of the filler material in the filled synthetic material is the light weight filler material, respectively the high weight filler material.

According to a third variant, said filler material comprises a portion of low weight filler materials as described in the first variant, and a portion of high weight filler materials as described in the second variant. Preferably the density of such filler material is within 25% of the density of the semi-crystalline or crystalline polymer, and preferably within 20% of the density of the semi-crystalline or crystalline polymer. For example a polypropylene with a density of 920 kg/m³ may comprise a filler material mix having a density between 690 kg/m³ and 1150 kg/m³, preferably between 736 kg/m³ and 1104 kg/m³. For example, such filler material may for 33.3 vol%, or one third, be a filler material having a density of 2500 kg/m³, for example chalk, and for 66.6 vol%, or two thirds, be a filler material having a density of 150 kg/m³, for example exfoliated vermiculite. Such filler material has a total density of 933 kg/m³, where 89,3 wt% is made up by the high weight filler, in this example, chalk.

In said third variant, preferably an amount of filler material is available in said filled synthetic material as expressed by a weight ratio filler to synthetic material of 50 to 250%, or preferably of 80 to 200%. Preferably, the density of the filled semi-crystalline or crystalline polymer is within 30%, or within 20%, of the density of the polymer concerned. In the case of a polypropylene of 920kg/m³, the density of the filled polypropylene material is preferably between 644 kg/m³ and 1196 kg/m³, or between 736 kg/m³ and 1104 kg/m³.

As an example of the third variant, in a filled polypropylene substrate material a ratio of 150% of the above 933 kg/m³ filler material may be applied. Making abstraction from possible minority additives, and with a density of 920 kg/m³ of the polypropylene, this means that about 60% of the volume of the filled synthetic material is formed by said filler and a total density of 928 kg/m³ is obtained. It is noted that such a highly filled polypropylene material has about the same weight as an unfilled polypropylene material, while still acceptable mechanical strength is obtained. The material savings on the polymer material, in such case, does not negatively influence the ergonomics and the transportation costs. It is clear that a highly filled synthetic material of about the same density as the polymer contained in the filled synthetic material, e.g. within 30%, or within 20%, of the density of the polymer concerned, may also be obtained in the case of filled polyethylene, such as filled LDPE or HDPE.

It is clear that a similar preferred embodiment as the third variant is possible in case of the abovementioned particular independent aspect, so regardless whether a semi-crystalline or crystalline polymer is applied. This preferred embodiment is a decorative panel comprising a substrate and a provided thereon top layer, wherein said substrate at least comprises a filled synthetic material, wherein said filled synthetic material is formed at least by a, preferably thermoplastic, polymer and filler material characterized in that said filler material comprises at least, and preferably consists of, a first portion and a second portion of filler material, wherein said first portion is a filler material having a density of 300 kg/m³ or lower, for example of 120-180 kg/m³, and/or comprises materials chosen from the list consisting of rice husk, cork, bamboo, sugar cane, foamed synthetic material, porous inorganic material, perlite, vermiculite, cenolite and pumicite, and wherein said second portion is a filler material having a density of 1200 kg/m³ or higher, for example a density of 1800-3000 kg/m³ and/or comprises materials chosen from the list consisting of chalk, talcum, limestone, CaCO3, sand and SiO2. Preferably the density of such filler material is within 25% of the density of the polymer, and preferably within 20% of the density of the polymer. As stated, said first portion and said second portion preferably make up for the entirety of the filler material available in said filled synthetic material. Preferably an amount of filler material is available in said filled synthetic material as expressed by a weight ratio filler to synthetic material of 50 to 250%, or preferably of 80 to 200%. Preferably an amount of filler material is available in said filled synthetic material as expressed by a weight ratio filler to synthetic material of 50 to 250%, or preferably of 80 to 200%. Preferably, the density of the filled synthetic material is within 30%, or within 20%, of the density of the polymer concerned. Preferably the second portion of the filler material, i.e. the high density portion, is present in the filled synthetic material in a higher percentage by weight than the first portion, while, preferably the second portion of the filler material is present in the filled synthetic material in a lower percentage by volume than the first portion. Preferably the difference in weight percentage between the second portion and the first portion is at least 20wt% or at least 25wt%. Preferably the difference in volume percentage between the second portion and the first portion is at least 5 vol%, or at least 10 vol%.

Besides filler materials, the substrate, or the filled synthetic material as the case may be, may comprise additives, such as one or more elastomers. Preferably 15 to 200 phr (parts per hundred by weight of the resin, i.e. the semi-crystalline or crystalline polymer) of the elastomer is used. The use of elastomers allows to set the desired flexibility of the panel. Preferably the flexural modulus of the substrate is 550MPa or less, and even better 275 MPa or less. As an elastomer styrene-ethylene/butylene-styrene triblock-copolymers (SEBS) may be used. This elastomer is especially effective in case the semi-crystalline polymer is a propylene-ethylene random copolymers (PP-R).

Preferably, in said substrate, or in the filled synthetic material as the case may be, the semi-crystalline or crystalline polymer is a mixture of a semi-crystalline or crystalline homopolymer, such as polypropylene or polyethylene, and a semi-crystalline or crystalline heteropolymer. Preferably said heteropolymer is at least built from monomers of said homopolymer. Preferably, said heteropolymer is built for at least 30 wt% or at least 50 wt% from the monomer of said homopolymer. For example, in the case the homopolymer is polypropylene, respectively polyethylene, the heteropolymer may be built at least from propylene, respectively ethylene, for example as is the case with a heteropolymer comprising ethylene and propylene, for example being a propylene-ethylene random copolymer (PP-R). In a special embodiment, the semi-crystalline or crystalline polymer is a mixture of polypropylene homopolymer and an ethylene propylene heteropolymer containing at least 50% ethylene, for example ethylene-propylene diene copolymer. In the mixtures of homo- and hetero-polymers of the present preferred embodiments the homopolymer preferably forms 25 to 45 mole percent, and even better 30 to 40 mole percent.

According to a special embodiment, said semi-crystalline polymer is foamed. Preferably the foaming leads to a weight reduction of 10% or more. Preferably the foam is a closed cell foam, i.e. a foam where the cells are predominantly closed chambers. As a blowing agent, for example citric acid and/or sodium bicarbonate may be used. An ideal semi-crystalline polymer for foaming is polypropylene-/polypropylene-grafted glycidyl methacrylate/thermoplastic polyester elastomer (PP/PP-g-GMA/TPEE).

According to the most preferred embodiment of the present invention in accordance with its first independent aspect, said substrate is a filled synthetic material comprising
- 30 to 65 vol% of a semi-crystalline polymer;
- preferably 3 vol% or more of an elastomer;
- 30 to 65 vol% or more of a filler material; and
- 5 vol% or less of additives other than elastomers and filler materials.
For the semi-crystalline polymer preferably use is made of homopolymers and/or heteropolymers of ethylene and/or propylene. For example, said semi-crystalline polymer may substantially be a mixture of polypropylene with ethylene-propylene copolymer or ethylene-propylene diene copolymer, or substantially be a mixture of polyethylene with ethylene-propylene copolymer or ethylene-propylene diene copolymer. Said filler materials may be chosen in accordance with the first, second or third variant described above.

With the same aim as in the first independent aspect, the present invention, in accordance with a second independent aspect is a method for manufacturing a decorative panel, wherein said panel comprises a substrate and a provided thereon top layer, wherein said substrate at least comprises a semi-crystalline polymer or a polymer chosen from the list consisting of polyacetal (POM), polyphenylene sulfide (PPS), polyamides (such as PA 6 and PA 66), polyethylene terephthalate (PET), polyethylene (PE), low-density polyethylene (LDPE), high-density polyethylene (HDPE), polybutylene terephthalate (PBT) and polypropylene (PP), wherein said method comprises a step wherein said substrate is provided at least partially by means of an extrusion operation wherein said polymer is extruded through a die, preferably with as a characteristic that said method further comprises one or a combination of two or more of the following steps.

In accordance with a first possible step, the method comprises the step of cooling the extruded semi-crystalline polymer, for example in a bath, preferably a water bath. The water in the bath may be maintained at a temperature above the glass transition temperature of the polymer, and preferably below the melting temperature of the respective polymer. Preferably the water is maintained at a temperature between 25° and 60°C. Cooling by means of a water bath allows to freeze in the obtained crystallinity and/or orientation in the polymer. Preferably, step of cooling is executed upstream from any embossing operation that provides a structure to the top layer of said decorative panel. In such case, the embossing can be executed more accurately, for example in correspondence with a decoration comprised in said top layer. According to a variant or in combination with said bath, spraying nozzles, or a liquid curtain may be used to cool the extruded semi-crystalline polymer preferably with water and/or gas, such as cooled air.

In accordance with a second possible step, the method comprises the step of actively drawing said extruded semi-crystalline polymer from said die. By actively drawing the semi-crystalline polymer, for example polypropylene, potentially an ethylene-polypropylene copolymer as described above, a more defined orientation of the polymer in the extrusion direction can be obtained. The active drawing may be obtained by pulling the extruded material in the nip of a pair of driven rollers, or by means of driven belts.

In accordance with a third possible step, the method comprises the step of adhering a mono-axially or bi-axially oriented polymer film onto said extruded semi-crystalline polymer. The adhering is preferably a thermal lamination, for example by means of one or more rollers. Adhering an oriented film, for example an oriented polypropylene film may stabilize the decorative panel. Preferably such film is applied at both sides of the extruded polymer material. More generally, preferably, at least one polymeric film, whether oriented or not, is thermally laminated at both flat sides of the extruded polymer material. In such case a decorative panel with a more stable, balanced, sandwich structure may be obtained. In case the present third possible step is combined with the above mentioned first possible step, the step of adhering said film preferably takes place downstream of said cooling, for example downstream of said bath. In such case, the substrate material is more stable and a more accurate adhering of said film may take place. In accordance with a variant, the step of adhering said film takes place upstream of said cooling, for example upstream of said bath. In the latter case, the available heat of the extruded polymer material may be used for adhering said film.

In accordance with a fourth possible step, the method comprises the step of heat treating the surface of said extruded semi-crystalline polymer, preferably by means of rollers and/or plates, wherein said rollers and/or plates are preferably cooled. In accordance with a variant, or in combination therewith, one or more rollers and/or plates may be heated. Preferably said rollers and/or plates are in direct contact with the surface of said extruded semi-crystalline polymer. The step of heat treating the extruded material allows for setting the crystallinity and/or orientation at a desired level. The step of heat treating may also be used to anneal possible induced stresses. Preferably, said step of heat treating takes place in between said die and a possible subsequent lamination operation, wherein, for example, said top layer or part thereof is laminated to said extruded semi-crystalline material, and/or in between said lamination operation and a possible embossing operation that provides a structure to the top layer of said decorative panel.

In accordance with a fifth possible step, the method comprises the step of, whether or not forcedly, cooling and thereafter heat treating said extruded semi-crystalline polymer, or vice-versa. The combination of cooling and subsequent heating may lead to freezing in the crystallinity and/or orientation, while the subsequent heating may bring about an annealing of induced stress and give raise to a shrinkage effect. Such heat treatment may avoid excessive shrinking after manufacturing and/or installation. It is clear that heating and/or cooling may be effected in many different ways, such as by using a water bath or nozzles, as in the first possible step, or by using rollers and/or plates, as described in connection to the fourth possible step.

In accordance with a sixth possible step, the method comprises the step of controlling the amount of crystallinity of said extruded semi-crystalline polymer. The crystallinity is preferably controlled by measuring the crystallinity of the extruded semi-crystalline material either inline, or offline, and changing at least one of the extrusion speed, the extrusion temperature, the temperature of a heat or cooling treatment, such as the temperature of the water in the bath of the first possible step, and/or the temperature of the rollers and/or plates, as described in connection to the fourth possible step. For inline measurement of the crystallinity an optical method may be used. For example, the extruded semi-crystalline material may be illuminated with a beam of light, collecting scattered light, converting the collected scattered light to a Raman spectrum, and determining the degree of crystallinity using the Raman spectrum. For example a the method described in WO 1999/027350 may be used. The result may be used to automatically adapt the extrusion speed, the extrusion temperature and/or the temperature of a heat or cooling treatment, for example in a feedback loop.

In accordance with a seventh possible step, the method comprises the step of dividing the extruded semi-crystalline polymer into panels having a dimension corresponding, or about corresponding, to the dimension of the finally to be obtained panels. For example, said panels may be rectangular and oblong. In accordance with a special embodiment the longitudinal direction of said panels is formed transversely to the extrusion direction. In such case, potential shrinkage or other dimensional instabilities resulting from an orientation of the semi-crystalline polymer in the extrusion direction are in the transverse direction of the panel, and can thus be limited in absolute size.

It is clear that the method of the second aspect is preferably applied for manufacturing panels in accordance with the first aspect of the invention and/or the preferred embodiments thereof.

In general it is remarked that, wherever crystallinity values are described herein, the crystallinity is preferably measured using differential scanning calorimetry (DSC) in accordance with ISO 11357-3:2018 and/or at a heating rate of 20°C/minute. Using DSC the remaining enthalpy of crystallization in a specimen can be measured for reaching 100% crystallinity. The remaining enthalpy is compared to the enthalpy of full crystallization when starting from an amorphous sample of the same polymer, to thus calculate the percentage of additional crystallization that takes place during the DSC. It is clear that the semi-crystallinity present in the specimen before the start of the DSC can then be expressed as 100% minus the obtained percentage of additional crystallization.

It is further clear that, where mention is made of a semi-crystalline polymer in the first and the second aspect of the invention, this polymer may be, or instead be, a polymer chosen from the list consisting of polyacetal (POM), polyphenylene sulfide (PPS), polyamides (such as PA 6 and PA 66), polyethylene terephthalate (PET), polyethylene (PE), low-density polyethylene (LDPE), high-density polyethylene (HDPE), polybutylene terephthalate (PBT) and polypropylene (PP). In accordance with the invention, such a polymer need then not necessarily be semi-crystalline, but for example may be crystalline, or substantially amorphous.

According to the most preferred embodiment, said polymer, or semi-crystalline polymer, is a mixture of polypropylene and, ethylene-propylene copolymer or ethylene-propylene diene copolymer.

In accordance with the present invention the substrate may be single-layered or comprising a plurality of substrate layers, preferably an uneven number of substrate layers. The substrate, whether single-layered or multi-layered, preferably forms at least half the thickness and/or half the weight of said decorative panel and/or is at least available at a central location within the thickness of said decorative panel.

The decorative panel of the invention preferably has a total thickness between 2 and 8 mm, and even better between 3.2 and 5.5 mm. The substrate, whether multi-layered or single layered, preferably has a thickness between 2 mm and 5 mm.

It is clear that, in the context of the present invention, any panel portion indicated as a layer, for example a substrate layer, has a clearly distinct property form the layers adjacent to it. The distinct property may for example comprise a different material composition, a different color, a different geometry.

The top layer, as mentioned in any of the aspects, may comprise a decoration, preferably a printed decoration. The top layer may further comprise a transparent or translucent layer applied on top of said printed decoration. According to a first possibility, said printed decoration is applied to a polymer foil, such as a polypropylene foil or a polyethylene foil. In such case, the wear layer may as well comprise a polypropylene foil or a polyethylene foil, and potentially a superficial e.g. UV and/or excimer cured, lacquer layer, for example of polyurethane. According to a second possibility, said printed decoration is applied by forming it on the semi-crystalline material, potentially with the intermediate of one or more priming and/or background layers. In such case the wear layer may be formed as a liquidly applied and UV and/or excimer cured lacquer layer, for example an acrylic lacquer layer.

The decoration of the top layer preferably comprises a wood pattern. In such case, the wood pattern preferably has a grain direction corresponding with the direction of one of the edges of said panel. In the case of a rectangular and oblong panel, it preferably corresponds to the direction of a longitudinal edge.

The decorative panel of any of the aspects mentioned above may be provided on at least two opposite edges with coupling parts, allowing that two such panels at the respective edges can be coupled to each other, wherein, in the coupled condition, a locking is obtained in a vertical direction perpendicular to the plane of coupled panels, and in a horizontal direction in the plane of coupled panels and perpendicular to said edges. Preferably, the coupling parts are basically formed as a tongue and groove with locking means. For example such coupling parts as described in WO 97/47834. The coupling parts and locking means preferably show one or more of the following properties:
- the property that said coupling parts and locking means are formed in one piece with the material of said decorative panel. Preferably the respective edge is formed for at least 70% of its contour, as seen in a cross-section in a plane perpendicular to said edge, out of said substrate comprising said semi-crystalline polymer material and/or said filled synthetic material;
- the property that said groove has a lower and an upper groove lip, wherein the lower groove lip preferably extends beyond said upper groove lip. Preferably, said locking means comprise a protrusion formed on the upper side of said lower groove lip, and an excavation at the bottom of said tongue;
- the property that the lower side of the upper groove lip and/or the upper side of the lower groove lip is entirely formed in said substrate comprising said semi-crystalline polymer material and/or said filled synthetic material. The lower side of the upper groove lip and/or the upper side of said lower groove lip are preferably entirely formed from said semi-crystalline material and/or said filled synthetic material;
- the property that said substrate is an extruded semi-crystalline polymer, wherein said horizontal direction coincides with the extrusion direction, wherein said panel is rectangular and oblong, and said coupling parts are preferably available at the pair of longitudinal edges. As an alternative said coupling parts are available at the pair of short edges, and/or at both pairs of edges.

With the intention of better showing the characteristics of the invention, herein below, as an example without any limitative character, some preferred embodiments are described, with reference to the accompanying drawings, wherein:
Figure 1 represents a floor panel with the characteristics of the invention;
Figure 2, at a larger scale, represents a cross-section according to the line II-II represented in figure 1;
Figure 3 represents the coupled condition of the coupling means illustrated in figure 2;
Figures 4 to 6, at a larger scale, represent a cross-section according to the line IV-IV represented in figure 1, however, for variants;
Figures 7 and 8, in a view similar to that of figure 3, represent variants;
Figure 9 in a view similar to that of figure 2 represents a variant;
Figure 10 illustrates some steps in a method for manufacturing decorative panels in accordance with the invention;
Figures 11 to 13 in a view on the area indicated with F11 in figure 10 illustrates variants.

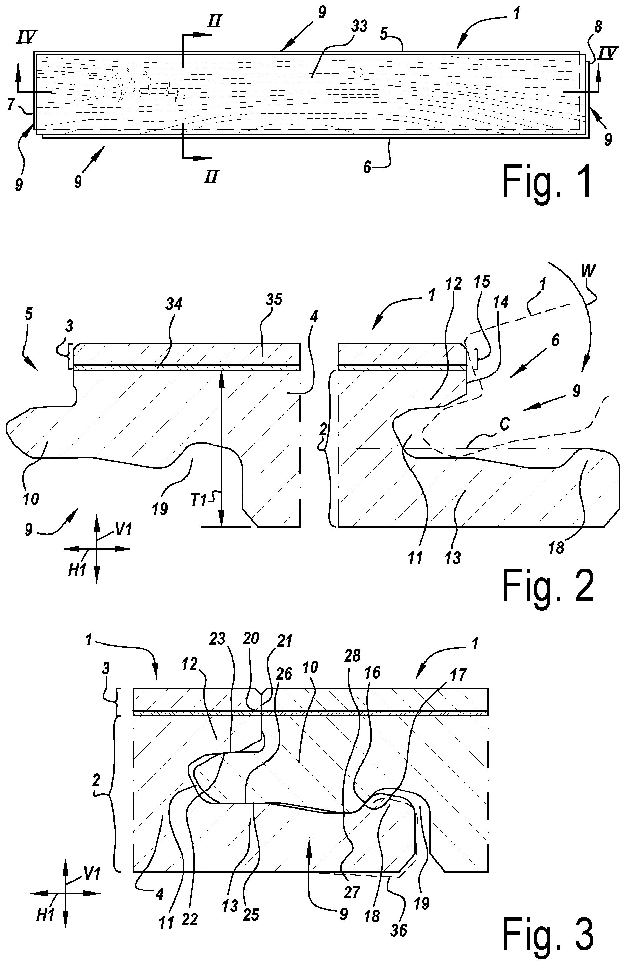

Figure 1 represents a rectangular floor panel 1. In this case the floor panel 1 is rectangular and oblong.

Figure 2 clearly shows that the floor panel 1 comprises a substrate 2 and a provided thereon decorative top layer 3.

The substrate 2 comprises a semi-crystalline polymer 4, in this case a filled ethylene-propylene copolymer, and is provided on at least two opposite edges 5-6-7-8, and in this case on the pair of long opposite edges 5-6 as well as on the pair of short opposite edges 7-8, with mechanical coupling means 9.

Figure 2 clearly shows that the coupling means 9 on the long opposite edges 5-6 substantially are realized as a tongue 10 and a groove 11 with an upper lip 12 and lower lip 13. In this case, the aforementioned lower lip 13 extends in horizontal direction to beyond the distal end 14 of the upper lip 12. The represented coupling means 9 allow at least a coupling by means of a turning movement W along the respective edges 5-6.

Figure 3 shows that in the coupled condition a locking is obtained in horizontal direction H1 perpendicular to the coupled edges 5-6 and in the plane of the panels 1, as well as in vertical direction V1 perpendicular to the plane of the coupled panels 1. The coupling means 9 consist of milled profiles, which for at least 70 percent of their circumference are provided in the substrate 2 and, in this case out of the filled semi-crystalline polymer 4. In this case, the coupling means 9 are provided practically entirely in the filled semi-crystalline polymer 4 of the substrate 2, with the exception of the portion 15 of their circumference being formed on the decorative top layer 3.

Figure 3 represents that at least one pair of horizontally active locking surfaces 16-17 of the coupling means 9 is realized in the semi-crystalline polymer material 4 of the substrate 2. Herein, this relates to a first pair of locking surfaces 16-17 formed on a protruding locking portion 18 of the lower lip 13 and a cooperating therewith locking groove 19 on the lower side of the tongue 10. A second pair of horizontally active locking surfaces 20-21 is formed in the example on the decorative top layer 3, or the aforementioned portion 15 of the circumference of the coupling means 9. Several pairs of the vertically active locking surfaces 22-23-25-26 are formed of the filled semi-crystalline polymer 4 of the substrate 2. Herein, this relates at least to a first pair of vertically active locking surfaces 22-23 on the upper side of the tongue 10 and the lower side of the upper lip 12 of the groove 11, and at least a second pair of vertically active locking surfaces 25-26 on the lower side of the tongue 10 and the upper side of lower lip 13 of the groove 11. In the example of figure 3, the second pair of vertically active locking surfaces 25-26 is formed such that they extend at least horizontally at a position vertically underneath the aforementioned upper lip 12. In this case, also a third pair of vertically active locking surfaces 27-28 is formed in the proximity of the aforementioned first horizontally active locking surfaces 16-17.

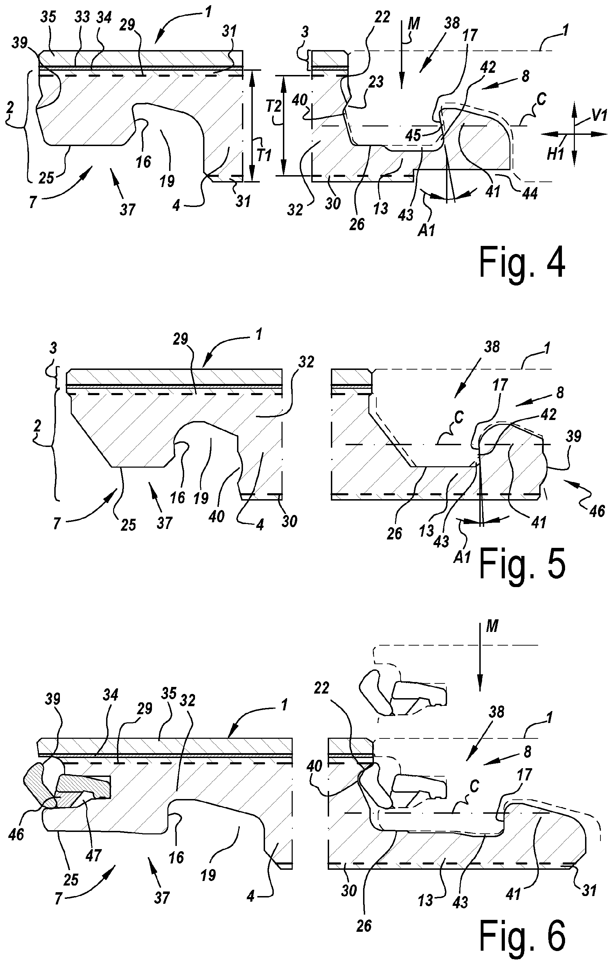

Figure 4 clearly shows that at least one, and in this case even a plurality of reinforcement layers 29-30 may be applied in the substrate 2. In the example, a first reinforcement layer 30 extends uninterruptedly in the aforementioned lower lip 13; a second reinforcement layer 29 extends uninterruptedly in the aforementioned upper lip 12. The first and second reinforcement layers 29-30 thus are situated off center with respect to the thickness T1 of the substrate 2. On the sides of the reinforcement layers 29-30 which are directed away from the center of the substrate 2, the reinforcement layers are, in the example, each time flanked by an additional substrate layer 31 of filled semi-crystalline polymer. In the example, these additional substrate layers 31 show another composition than the central substrate layer 32 of substrate 2, for example, in that they contain no or less fillers than the central substrate layer 32. It is noted that the example of figure 4 shows the fifth possible property mentioned in the introduction, wherein said additional substrate layers 31 have an equal thickness and are positioned with one of their main surfaces at equal distance from the center line C of the substrate 2. Said additional substrate layers 31 are distanced at least by said central substrate layer 32.

It is clear that the substrate 2, or at least the central substrate layer 32 thereof, preferably is positioned such that it is at least centrally present in the substrate 2, namely, on the central line C. In this case, the thickness T2 of the central substrate layer 32, i.e. the layer between the two reinforcement layers 29-30, amounts to more than 40 percent of the thickness T1 of the substrate.

The aforementioned decorative top layer 3 comprises a printed motif 33 and represents a single wooden plank. The printed motif 33 is provided on a thermoplastic foil 34, namely in this case, a biaxially oriented polypropylene foil. The floor panel 1 further also comprises a translucent or transparent wear layer 35, which is provided above the aforementioned decoration or printed motif 33.

It is noted that, according to a not represented embodiment, a floor panel 1 according to the invention may show an additional layer on the lower side of the substrate 2. Herein, this preferably relates to a foam layer, for example, of cross-linked or crosslinked polyethylene (XPE), which is fixed to the lower side of the substrate 2 by means of glue, for example in particular is fixed to the substrate layer 31 which flanks the reinforcement layer 30. In this case, this relates to a soft foam.

Further, it is noted that in the coupled condition of figure 3 a tension force can be obtained between the respective floor panels 1, more particularly at the location of the second pair of horizontally active locking surfaces 20-21, namely between the respective decorative top layers 3 on the upper edges of the coupled floor panels 1. In dashed line 36 in figure 3 is represented that such tension force can be obtained, for example, in that the lower lip 13 in the coupled condition is spring-deflected and in the coupled condition pushes against the tongue 10. Such pretension is known as such, for example, from WO 97/47834.

According to a not-represented variant of figure 3, instead of a pretension, a so-called play may be present in the coupled condition. In such case, in a coupled condition, some space may be available between the first pair of horizontally active locking surfaces 16-17, while a second pair of horizontally active locking surfaces is in contact at a position above the vertically active contact surfaces 22-23 between the upper side of the tongue 10 and the lower side of the upper lip 12 of the groove 11. Such space preferably extends over a horizontal distance smaller of 0,2 mm or smaller.

At the opposite short edges 7-8 of the floor panel 1 in the example of figures 1 to 3 the same coupling means 9 are applied as at the long opposite edges 5-6.

Besides illustrating the optional reinforcement layers 29-30, and the optional additional substrate layers 31, figure 4 gives an example of a decorative panel in accordance with the invention wherein the short edges 7-8 are provided with coupling means 9 having a male part 37 and a female part 38, which allow coupling two of such floor panels 1 at the respective short edges 7-8 by means of a downward movement M of the male part 37 in the female part 38, wherein in the coupled condition a locking in a horizontal direction H1 as well as in a vertical direction V1 is effected. The combination of a turnable profile on the long edges 5-6, for example, according to figures 2 and 3, and a downwardly coupleable profile at the short edges 7-8, for example, according to any of the figures 4 to 6, leads to the creation of a floor panel 1 which can be coupled by means of a so-called fold-down movement. Herein, the long edges 5-6 are provided in each other by means of a turning movement W, wherein by this turning movement W at the short edges 7-8 a downward movement M is created, which provides the male part 37 present there in the female part 38.

The example of such downwardly coupleable profile, represented here, is made in one piece with the substrate 2 of the floor panel 1 and comprises, for effecting the locking, a cooperating snap hook 39 and undercut 40, as well as a hook-shaped part 41 on the lower lip 13, which in this case also shows an undercut 42. The undercut 42 on the hook-shaped part 41 is made such that it forms an angle A1 with the vertical of 1° to 10° and preferably approximately 5°. The locking groove 19, which cooperates with the aforementioned hook-shaped part 41, is positioned entirely underneath the reinforcement layer 29 at the upper surface.

The aforementioned cooperating snap hook 39 and undercut 40 in this case comprise vertically active contact surfaces 22-23, cooperating in the coupled condition, which are realized in the filled semi-crystalline polymer 4 of the substrate 2. The horizontally as well as vertically active contact surfaces 16-17 of the hook-shaped part 41 are also realized entirely in the filled semi-crystalline polymer 4 of the substrate 2.

The upper surface of the lower lip 13 consists entirely of the filled semi-crystalline polymer 4 of the substrate 2. In coupled condition, the edge profiles also show vertically active contact surfaces 25-26 formed on this upper surface. Between these vertically active contact surfaces 25-26 and horizontally active contact surfaces 16-17, a space 43 is present. The uppermost reinforcement layer 29 extends in one piece over the aforementioned locking groove 19 at the lower side of the male coupling part 37.

At the lower side of the lower lip 13, a recess 44 is realized, which extends at least partially underneath the aforementioned space 43. It provides for a smoother coupling, even with the represented overlap 45 in the contours of the male coupling part 37 and the female coupling part 18 at the location of the horizontally active locking surfaces 16-17. The lowermost reinforcement layer 30 is removed at the location of the aforementioned recess 44. This does not necessarily have to be so. According to a not represented embodiment, the lowermost reinforcement layer 30 can extend in one piece above said recess 44.

Figure 5 represents a variant of profiles which can be coupled into each other by a downward movement M, wherein the snap hook 39 is situated at the distal end 46 of the lower lip 13 of the female part 38, whereas the undercut 40 is provided in the male part 38. Here, too, the upper surface of the lower lip 13 is formed entirely from the filled semi-crystalline polymer 4 of the substrate 2, and in coupled condition the edge profiles show vertically active contact surfaces 25-26 formed on this upper surface. Between these vertically active contact surfaces and horizontally active contact surfaces 16-17, a space 43 is present. The lowermost reinforcement layer 30 extends in one piece in the lower lip 13, and the uppermost reinforcement layer 29 extends in one piece over the aforementioned locking groove 19 at the lower side of the male coupling part 37.

In the example of figure 5, too, the hook-shaped part 41 is realized with an undercut 42, wherein this undercut 42 is realized such that it forms an angle A1 with the vertical of 1° to 10°, and preferably approximately 5°. It is evident that, in figure 4 as well as in figure 5, such undercut 42 at the location of the horizontally active contact surfaces 16-17 on the hook-shaped part 41 is not necessary and that as well contact surfaces can be used which are vertical or which are less steeply inclined than the vertical, for example, with an inclination wherein the respective contact surfaces enclose an angle with the horizontal of 45° to 90°.

Figure 6 represents a variant of downwardly coupleable profiles, wherein the snap hook 39 is formed by a separate insert 46, which in this case is provided in the male part 37. Such separate insert 46 preferably is formed of thermoplastic material, for example, at least from PP, PVC or ABS (Acrylonitrile-butadiene-styrene), and in coupled condition preferably shows, such as here, a vertically active contact surface 22 with the filled semi-crystalline polymer 4 of the female part 38. In this manner, a precise vertical positioning of the male part 37 in the female part 38 can be obtained. The aforementioned separate insert 46 is situated, in this example, in a seat 47 with walls, which are entirely formed from the filled semi-crystalline polymer 4 of the substrate 2.

It is clear that the hook-shaped part 41, the cooperating therewith locking groove 19 on the lower side of the male part 37, respectively, extends in the examples of the figures 4 to 6 each time up into the upper half of the substrate 2, thus, to above the central line C.

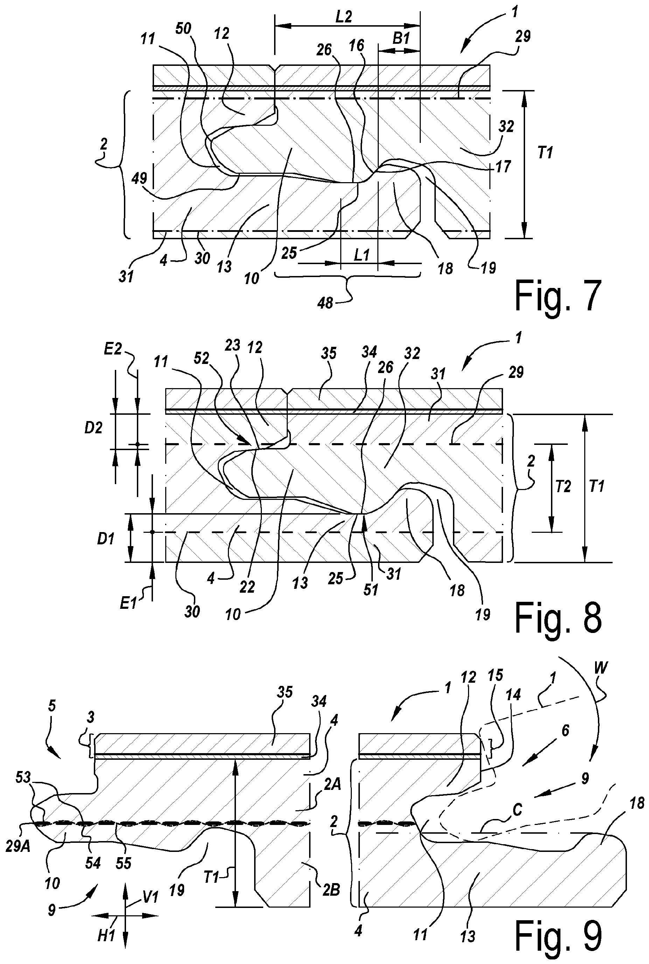

Figure 7 represents another variant, wherein the coupling means 9, for example, the coupling means 9 of the long opposite edges 5-6, show some preferred characteristics, which each separately or in any combination offer an edge profile which is ideally suited for being applied in a floor panel 1 with a substrate 2 of filled semi-crystalline polymer 4, such as a filled ethylene-propylene copolymer. This relates to the following characteristics:
- the vertically active locking surfaces 25-26 between the lower side of the tongue 10 and the upper side of the lower lip 13 are situated substantially, and in this case even entirely, on the protruding part 48 of the lower lip 13, namely on that part of the lower lip 13 which extends to beyond the distal end of the upper lip 12. Preferably, in the coupled condition a space 49 is situated between the lower side of the tongue 10 and the upper side of the lower lip 13, wherein this space 49, such as here, extends horizontally underneath the tongue 10 at least from on the tip 50 of the tongue 10 up to beyond the distal end of the upper lip 12. In this manner, the risk of breaking of the tongue 10 when turning the tongue 10 into the groove 11 is minimized, whereas still a sufficient vertical locking is obtained; and/or
- the projection in the horizontal plane of the vertically active contact surfaces 25-26 between the lower side of the tongue 10 and the upper side of the lower lip 13 shows a length L1 which is at least 15%, and still better at least 20% or 25%, of the length L2 of the protruding part 48 of the lower lip 13; and/or
- the length L2 of the protruding part 48 of the lower lip 13 is at least 80% of the thickness T1 of the substrate layers comprising filled semi-crystalline polymer 4 and preferably is smaller than 130% of the thickness T1 thereof; and/or
- the smallest width B1 of the standing portion 18 of the lower lip 13 at the location of the horizontally active locking surfaces 16-17 is at least 15% of the thickness T1 of the substrate layers comprising filled semi-crystalline polymer 4 and still better at least 20% of the thickness T1 of the substrate layers comprising filled semi-crystalline polymer 4.

Figure 8 represents another variant, wherein the coupling means 9, for example, the coupling means of the long opposite edges 5-6, show some preferred characteristics, which each separately or in any combination result in an edge profile which is ideally suited for being applied in a floor panel 1 with a substrate 2 of, whether or not filled, semi-crystalline polymer 4, such as a filled ethylene-propylene copolymer. This concerns, amongst others, the characteristics already mentioned in connection with figure 7, and the following characteristics, which, however, do not necessarily have to be applied in combination with those from figure 7:
- the lower lip 13 shows a point 51 or area where the remaining thickness D1 of the lower lip 13 is smallest, wherein the floor panel 1 comprises a reinforcement layer 30 which extends in the respective lower lip 13, and wherein said reinforcement layer 30, at the location of said point 51 or area, is situated off center from the remaining thickness D1, preferably, such as shown here with the arrows E1, closer to the upper side of the lower lip 13 than to the lower side. In this manner, a very significant effect on the possible bending of the lower lip 13 is obtained; and/or
- the upper lip 12 shows a point or area 52, at the location of the vertically active locking surfaces 22-23, where the remaining thickness D2 of the upper lip 12 is smallest, wherein the floor panel 1 comprises a reinforcement layer 29 which extends in the respective upper lip 12, and wherein said reinforcement layer 29, at the location of said point or area 52, is situated off center from the remaining thickness D2, preferably, such as shown here with the arrows E2, closer to the lower side of the upper lip 12 than to the upper side. In this manner, a very significant effect on the possible bending of the upper lip 12 is obtained.

It is noted that the example coupling means 9 illustrated by means of the figures may be used on any pair of opposite edges5-6-7-8, in any decorative panel 1 having the characteristics of the first aspect of the invention and/or the particular independent aspect mentioned in the introduction, and/or being obtained through a method in accordance with the second aspect of the present invention, and/or the preferred embodiments of these aspects.

Figure 9 shows an example floor panel 1 having a substrate 2 with an integrated reinforcement layer 29A. In this case a woven glass fiber reinforcement layer 29A. The woven glass fiber reinforcement layer 29A has a net structure of glass fibers 53 extending in at least two crossing directions. In the plane of figure 9 the cross-section of the glass fibers 53 that run in the longitudinal direction of the floor panel 1 are shown, while in dashed line 54 a glass fiber running in the transversal direction of the floor panel 1 is illustrated. The semi-crystalline or crystalline polymer of the substrate 2 is continuous through the openings 55 of the reinforcement layer 29. In this case, the semi-crystalline polymer 4 is continuous through the openings 55 or mazes of said net structure. In the example the reinforcement layer 29A is centrally located in the substrate 2, i.e. midway, about midway or substantially in the middle of the thickness T1 of the substrate 2. Preferably, both substrate portions 2A-2B at either side of the reinforcement layer 29A have a same or similar composition.

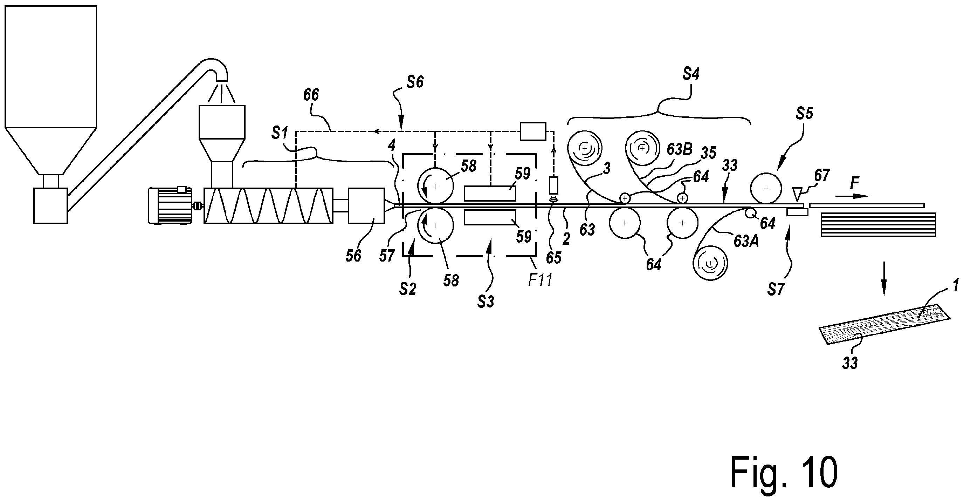

Figure 10 illustrates a method for manufacturing a decorative floor panel 1 with a substrate 2 and a provided thereon top layer 3. The substrate 2 comprises semi-crystalline polymer 4. The substrate 2 is provided by means of an extrusion operation S1 wherein the semi-crystalline polymer 4 is extruded through a die 56. The illustrated method further comprises a step S2 of actively drawing said extruded semi-crystalline polymer 4 from said die 56. In this case the extruded semi-crystalline polymer 4 is pulled in the nip 57 of a pair of driven rollers 58, which may also perform a thickness calibration and/or cooling of the extruded semi-crystalline polymer 4.

Figure 10 further illustrates that a step S3 of cooling the extruded semi-crystalline polymer 4 may be comprised in the method of the invention. Figure 10 illustrates that this can be done by means of cooled plates 59 that preferably are in contact with one or more of the surfaces of the extruded semi-crystalline polymer 4. In the example the heat treatment takes place downstream of the die 56 and upstream of the subsequent lamination operation S4 and embossing operation S5.

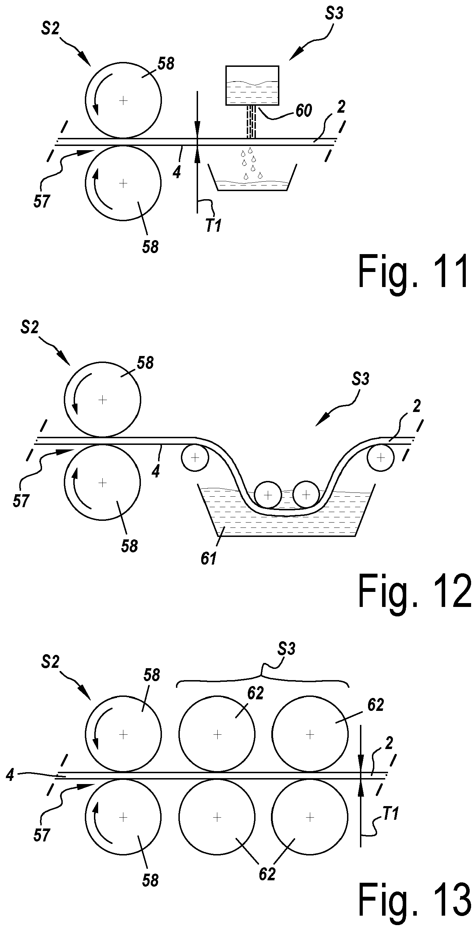

Figure 11 illustrates a variant where in the step S3 spraying nozzles 60 are applied to cool the extruded semi-crystalline polymer 4 by spraying water on one or more of its surfaces.

Figure 12 illustrates a variant where in the step S3 the extruded semi-crystalline polymer 4 is cooled in a water bath 61, wherein the water is maintained at a temperature above the glass transition temperature of the semi-crystalline polymer 4.

Figure 13 illustrates a variant where in the step S3 further cooled and/or heated rollers 62 are applied to heat treat the extruded semi-crystalline polymer 4. The additional rollers 62 may aid in the further calibration of the thickness T1 of the extruded semi-crystalline polymer 4.

It is remarked that the driven rollers 58 may be heated or cooled to assist or take part in the heat treatment of the step S3.

In the lamination step S4 of figure 10, upstream of said heat treatment step S3, a bi-axially oriented polymer film 63 is applied onto said extruded semi-crystalline polymer 4 by means of a thermal lamination operation with rollers 64. In this case the polymer film 63 is a decorative layer 3 having a printed motif 33. In the lamination step S4 also at the bottom of the extruded semi-crystalline polymer 4 a film 63A is thermally laminated. Preferably, the film 63A is identically oriented as the biaxially oriented polymer film 63 which is applied on top of the extruded semi-crystalline polymer 4.

As shown, also a wear layer 35 e.g. in the form of a transparent bi-axially oriented polymer film 63B may be applied on top of said printed motif 33.

Preferably, at least one axis of orientation of the polymer films 63 and 63A is equal or about equal. Preferably, the axis of orientation of the polymer films 63 and 63A is coinciding with the direction of orientation of the semi-crystalline polymer 4 and/or the extrusion direction F.

Figure 10 further illustrates that the method comprises the step S6 of controlling the amount of crystallinity of said extruded semi-crystalline polymer 4. In the example, the crystallinity of the semi-crystalline of crystalline polymer 4 is measured optically by illuminating the extruded semi-crystalline polymer 4 with a beam of light 65, collecting scattered light, and converting the collected light to a Raman spectrum. The information on the crystallinity may then be used to change at least one the extrusion speed, the extrusion temperature and the temperature of the heat treatment step S3, as shown by means of the dashed line 66.

Figure 10 also shows that the method comprises the step S7 of dividing the extruded semi-crystalline polymer 4 and the applied films 63-63A-63B into panels 1 having about the dimensions of the finally to be obtained floor panels 1. The dividing may take place by means of a saw and/or a punch and/or a knife 67.

The present invention is not limited to the preferred embodiments described here above, but such panels and methods may be realized according to several variants without leaving the scope of the invention.

## Claims

1. Decorative panel comprising a substrate (2) and a provided thereon top layer (3), wherein said substrate (2) at least comprises a semi-crystalline polymer (4), **characterized in that** said decorative panel (1) shows one or a combination of two or more of the following properties:
- the property that the crystallinity of said polymer is below 85%, as measured using differential scanning calorimetry;
- the property that the crystallinity of said polymer is above 35%, preferably above 50%;
- the property that said polymer is mono-axially oriented;
- the property that said top layer comprises semi-crystalline polymer, wherein the crystallinity of said polymer comprised in said substrate (2) is lower than the crystallinity of said polymer comprised in said decorative top layer (3);
- the property that said substrate (2) comprises a plurality of substrate layers, wherein at least two of said plurality of substrate layers comprise a semi-crystalline polymer (4).

2. Decorative panel according to claim 1, **characterized in that** said semi-crystalline polymer (4) is chosen from the list consisting of polyacetal (POM), polyamides (PA 6 and PA 66), polybutylene terephthalate (PBT), polyethylene terephthalate (PET), low-density polyethylene (LDPE), high-density polyethylene (HDPE), polyphenylene sulfide (PPS), and polypropylene (PP).

3. Decorative panel according to claim 1, **characterized in that** said substrate (2) comprises a filled synthetic material, wherein said filled synthetic material is formed at least by said semi-crystalline polymer (2) and filler material.

4. Decorative panel according to claim 3, **characterized in that** said filler material comprises materials chosen from the list consisting of rice husk, cork, bamboo, sugar cane, foamed synthetic material, porous inorganic material, perlite, vermiculite, cenolite and pumicite.

5. Decorative panel according to claim 3 or 4, **characterized in that** said filler material comprises materials chosen from the list consisting of chalk, talcum, limestone, CaCO3, sand and SiO2.

6. Decorative panel according to any of the preceding claims, **characterized in that** said semi-crystalline polymer (4) is foamed.

7. Decorative panel according to any of the preceding claims, **characterized in that** said semi-crystalline polymer is a mixture of polypropylene and, ethylene-propylene copolymer or ethylene-propylene diene copolymer.

8. Decorative panel comprising a substrate (2) and a provided thereon top layer (3), wherein said substrate (2) at least comprises a filled synthetic material, wherein said filled synthetic material is formed at least by a, preferably thermoplastic, polymer and filler material **characterized in that** said filler material comprises filler material having a density of 300 kg/m³ or lower, for example of 120-180 kg/m³, and/or materials chosen from the list consisting of rice husk, cork, bamboo, sugar cane, foamed synthetic material, porous inorganic material, perlite, vermiculite, cenolite and pumicite.

9. Decorative panel according to claim 8, **characterized in that** the entirety, or at least 75 vol%, of the filler material in the filled synthetic material is said filler material having a density of 300 kg/m³ or lower, for example of 120-180 kg/m³, and/or materials chosen from the list consisting of rice husk, cork, bamboo, sugar cane, foamed synthetic material, porous inorganic material, perlite, vermiculite, cenolite and pumicite.

10. Decorative panel according to claim 8, **characterized in that** said filler material comprises at least, and preferably consists of, a first portion and a second portion of filler material, wherein said first portion is a filler material having a density of 300 kg/m³ or lower, for example of 120-180 kg/m³ or lower, and/or comprises materials chosen from the list consisting of rice husk, cork, bamboo, sugar cane, foamed synthetic material, porous inorganic material, perlite, vermiculite, cenolite and pumicite, and wherein said second portion is a filler material having a density of 1200 kg/m³ or higher, for example a density of 1800-3000 kg/m³ and/or comprises materials chosen from the list consisting of chalk, talcum, limestone, CaCO3, sand and SiO2.

11. Decorative panel according to claim 10, **characterized in that** the density of said filler material is within 25% of the density of the polymer, and preferably within 20% of the density of the polymer.

12. Decorative panel according to claim 10 or 11, **characterized in that** an amount of filler material is available in said filled synthetic material as expressed by a weight ratio filler to synthetic material of 50 to 250%, or preferably of 80 to 200%.

13. Decorative panel according to any of claims 10 to 12, **characterized in that** an amount of filler material is available in said filled synthetic material as expressed by a weight ratio filler to synthetic material of 50 to 250%, or preferably of 80 to 200%.

14. Decorative panel according to any of claims 10 to 13, **characterized in that** the density of the filled synthetic material is within 30%, or within 20%, of the density of the polymer concerned.

15. Method for manufacturing a decorative panel, wherein said panel comprises a substrate (2) and a provided thereon top layer (3), wherein said substrate (2) at least comprises a semi-crystalline polymer, wherein said method comprises a step wherein said substrate (2) is provided at least partially by means of an extrusion operation (S1) wherein said semi-crystalline polymer is extruded through a die (56), **characterized in that** said method further comprises one or a combination of two or more of the following steps:
- the step of cooling the extruded semi-crystalline polymer (4) in a bath (61);
- the step of actively drawing said extruded semi-crystalline polymer (4) from said die (56);
- the step of adhering a mono-axially or bi-axially oriented polymer film (63-63A) onto said extruded semi-crystalline polymer (4);
- the step of treating the surface of said extruded semi-crystalline polymer (4) by means of rollers (62) and/or plates (59), wherein said rollers (62) and/or plates (59) are preferably cooled;
- the step of, whether or not forcedly cooling and thereafter heat treating said extruded semi-crystalline polymer (4);
- the step of controlling the amount of crystallinity of said extruded semi-crystalline polymer (4).
